(19) **Europäisches Patentamt / European Patent Office / Office européen des brevets**

(11) **EP 2 734 479 B1**

(12) **FASCICULE DE BREVET EUROPEEN**

(45) Date de publication et mention de la délivrance du brevet:
**18.12.2019 Bulletin 2019/51**

(51) Int Cl.:
*C03B 5/43* *(2006.01)*     *C03B 7/02* *(2006.01)*
*C04B 35/66* *(2006.01)*     *C04B 35/101* *(2006.01)*

(21) Numéro de dépôt: **12758612.1**

(22) Date de dépôt: **12.07.2012**

(86) Numéro de dépôt international:
**PCT/IB2012/053580**

(87) Numéro de publication internationale:
**WO 2013/011432 (24.01.2013 Gazette 2013/04)**

(54) **PROCÉDÉ DE FABRICATION D'UN CANAL D'ALIMENTATION DE VERRE EN FUSION**

VERFAHREN ZUR HERSTELLUNG EINES SPEISEKANALS FÜR GESCHMOLZENES GLAS

PROCESS FOR THE MANUFACTURING OF A FEEDER CHANNEL FOR MOLTEN GLASS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2011 FR 1156578**

(43) Date de publication de la demande:
**28.05.2014 Bulletin 2014/22**

(73) Titulaire: **Saint-Gobain Centre de Recherches et d'Etudes Européen**
**92400 Courbevoie (FR)**

(72) Inventeurs:
- **LINNOT, Cyril**
  **F-69003 Lyon (FR)**
- **BOBO, Michel**
  **F-84450 Saint-saturnin Les Avignon (FR)**

(74) Mandataire: **Nony**
**11 rue Saint-Georges**
**75009 Paris (FR)**

(56) Documents cités:
WO-A2-2004/065327    FR-A1- 2 458 520
FR-A1- 2 894 957    FR-A1- 2 937 636
JP-A- 8 057 820    JP-A- 11 071 117
US-A- 3 294 517

- M. Dunkl: "Feuerfeste Werkstoffe im Kontakt mit der Glasschmelze" In: HVG: "Fortbildungskurs 1998: Feuerfeste Werkstoffe für die Glasindustrie und deren Prüfung", 1 janvier 2005 (2005-01-01), HVG, Offenbach, XP002668505, ISBN: 3-921089-24-7 pages 24-25,38, pages 25,38

## Description

### Domaine technique

L'invention concerne un procédé de fabrication d'un bloc d'infrastructure d'un canal d'alimentation de verre en fusion, en anglais « feeder », et un procédé de fabrication d'un tel canal d'alimentation.

### Etat de la technique

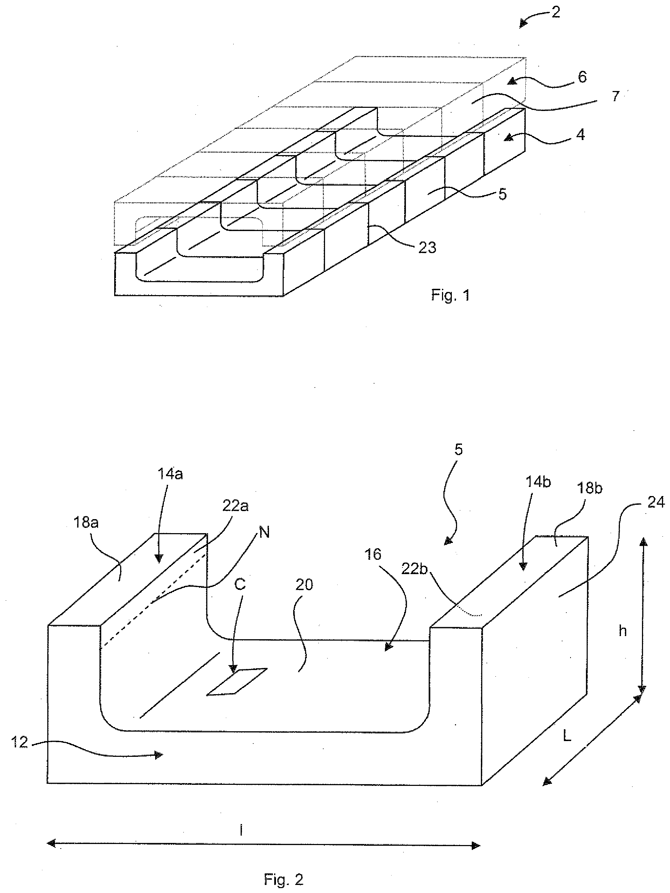

Comme représenté sur la figure 1, un canal d'alimentation 2 de verre en fusion comporte classiquement une infrastructure 4 formée par assemblage de blocs réfractaires frittés 5, et une superstructure 6 formée par assemblage de blocs réfractaires frittés 7. Comme représenté sur la figure 2, un bloc 5 d'infrastructure de canal d'alimentation présente la forme d'un profilé en « U » comportant une base 12 à partir de laquelle s'étendent, sensiblement perpendiculairement à la base 12, deux jambages 14a et 14b. La longueur L du bloc d'infrastructure, ou « pas », est typiquement d'environ 610 mm, sa largeur l est comprise entre 900 mm et 2100 mm, et sa hauteur h d'environ 300 mm.

Les blocs de l'infrastructure d'un canal d'alimentation, qui entrent en contact avec le verre en fusion, doivent répondre à des exigences très sévères.

Le canal d'alimentation est en effet la partie terminale, par laquelle transite le verre en fusion conditionné, c'est-à-dire « prêt à l'usage ». Tout défaut généré dans le canal d'alimentation présente une probabilité importante d'entraîner des rebuts dans les articles de verre, à la différence des défauts générés en amont dans le four. Ces derniers sont en effet soumis à des températures beaucoup plus élevées que celles qui règnent dans le canal d'alimentation. En outre, ils sont soumis à ces températures beaucoup plus longtemps que les défauts générés dans le canal d'alimentation. La probabilité que ces défauts soient éliminés est donc plus élevée que pour les défauts générés dans le canal d'alimentation.

Les contraintes des blocs mis en contact avec du verre en fusion sont également très différentes de celles des blocs mis en contact avec un métal en fusion, notamment en qui concerne les mécanismes de corrosion.

Classiquement, pour fabriquer les blocs de l'infrastructure, une charge de départ est mise en forme par pressage, ou par coulage, avec ou sans vibrations. En particulier, lorsqu'un procédé de coulage est utilisé, un moule en forme de U inversé peut être rempli par gravité avec la charge de départ, par la face du moule correspondant au « dos » sur lequel reposera le bloc d'infrastructure lors de son utilisation. On préserve ainsi la surface destinée à entrer en contact avec le verre en fusion, dite « surface de contact » 16. En particulier, la préforme étant à l'envers par rapport à sa position d'utilisation, les bulles remontent en s'éloignant des surfaces supérieures 18a et 18b des jambages et de la surface de fond 20 de la base 12. Elles n'affectent donc pas la surface de contact 16 délimitée par la surface de fond 20 et les parties des surfaces intérieures 22a et 22b des jambages 14a et 14b, respectivement, qui s'étendent depuis la surface de fond 20 jusqu'à la ligne de flottaison N du verre en fusion.

Pour constituer l'infrastructure du canal d'alimentation, les blocs sont agencés bord à bord, sans ciment de liaison.

L'assemblage des blocs est une opération délicate et longue.

L'article « Feuerfeste Werkstoffe im kontakt mit der Glassschmelze », HVG: "Fortbildungskurs 1998: Feuerfeste Werkstoffe für die Glasindustrie und deren Prüfung", 1 janvier 2005 (2005-01-01), HVG, Offenbach, ISBN: 3-921089-24-7 pages 24-25,38, décrit des blocs pouvant être fabriqués par coulage d'une barbotine dans des moules en gypse.

Le document WO 2004/065327 décrit un procédé de fabrication d'un bloc réfractaire.

Il existe un besoin permanent pour un procédé permettant une fabrication plus rapide d'un canal d'alimentation.

Le but de l'invention est de satisfaire ce besoin.

### Résumé de l'invention

Selon l'invention, on atteint ce but au moyen d'un procédé de fabrication d'un bloc d'une infrastructure d'un canal d'alimentation de verre en fusion de four de verrerie, le procédé étant selon l'une quelconque des revendications 1 à 16. Il est aussi décrit un canal d'alimentation de verre en fusion comportant une infrastructure comportant un bloc autocoulé *in situ* et fritté *in situ,* ci-après « bloc fabriqué selon l'invention ».

Bien que l'autocoulage soit une caractéristique de procédé, un homme du métier peut aisément déterminer si un bloc d'infrastructure est autocoulé : En effet, la réalisation d'un bloc de l'infrastructure par autocoulage *in situ* implique que le bloc en cours de fabrication soit disposé avec l'ouverture du U vers le haut, contrairement à la technique antérieure décrite ci-dessus. Un bloc d'infrastructure autocoulé *in situ* fabriqué selon l'invention présente donc une face de coulée à la surface supérieure des jambages du bloc. Or une face de coulée a un aspect qui la rend immédiatement identifiable par un homme du métier. En particulier, elle ne présente pas l'empreinte du moule, mais des lignes de coulée (stries) caractéristiques.

L'analyse de la microstructure du bloc permet par ailleurs de vérifier si un bloc a été fritté.

La réalisation d'au moins une partie de canal d'alimentation par autocoulage *in situ* permet avantageusement de fabriquer des blocs de grandes dimensions.

Avantageusement, une fabrication par autocoulage est donc rapide à mettre en œuvre.

Par ailleurs, selon la technique conventionnelle, deux blocs adjacents sont séparés par un espace, ou « joint » 23. Le joint est une région particulièrement sensible aux attaques par le verre en fusion. La dégradation des blocs au niveau des joints est donc susceptible de réduire la durée de vie du canal d'alimentation et de générer des défauts diminuant le rendement de fabrication des articles de verre. Cette dégradation est d'autant plus importante que les joints peuvent être amenés à s'ouvrir sous l'effet de la température.

Une fabrication par autocoulage permet avantageusement de limiter le nombre de joints.

Un mode de réalisation particulier consiste à couler le bloc dans l'enveloppe métallique, dite « casing », dans laquelle le bloc est disposé. Un casing est classiquement prévu pour protéger et supporter le canal d'alimentation. La longueur du bloc peut être égale à celle du casing dans lequel il est disposé. De préférence, tous les blocs d'un casing sont coulés simultanément, ce qui permet avantageusement de diminuer le temps de réalisation.

Comme on le verra plus en détail dans la suite de la description, les inventeurs sont parvenus à fabriquer un bloc d'infrastructure par autocoulage *in situ* et frittage *in situ* en dépit des inconvénients classiquement associés à la mise en œuvre *in situ* de ces techniques :

En particulier, la disposition du bloc en cours de fabrication avec l'ouverture du U orientée vers le haut a tendance à faire remonter les bulles vers la surface utile et, donc à dégrader cette surface.

De plus, la qualité de frittage est bien maîtrisée dans un four de cuisson. Au contraire, un frittage *in situ* est généralement effectué lors de l'attrempage à une température plus faible que dans un four de cuisson. En outre, la disposition des blocs frittés *in situ* conduit classiquement à une hétérogénéité des températures au sein des blocs pendant le frittage, les faces en contact avec l'intérieur du canal d'alimentation étant portées à des températures plus élevées que les autres faces. Il en résulte une variabilité de la qualité du frittage au sein des blocs.

Grâce au procédé de fabrication selon l'invention décrit ci-après, les inventeurs sont parvenus à surmonter ces obstacles.

Un canal d'alimentation de verre en fusion fabriqué selon l'invention peut présenter encore une ou plusieurs des caractéristiques optionnelles suivantes :

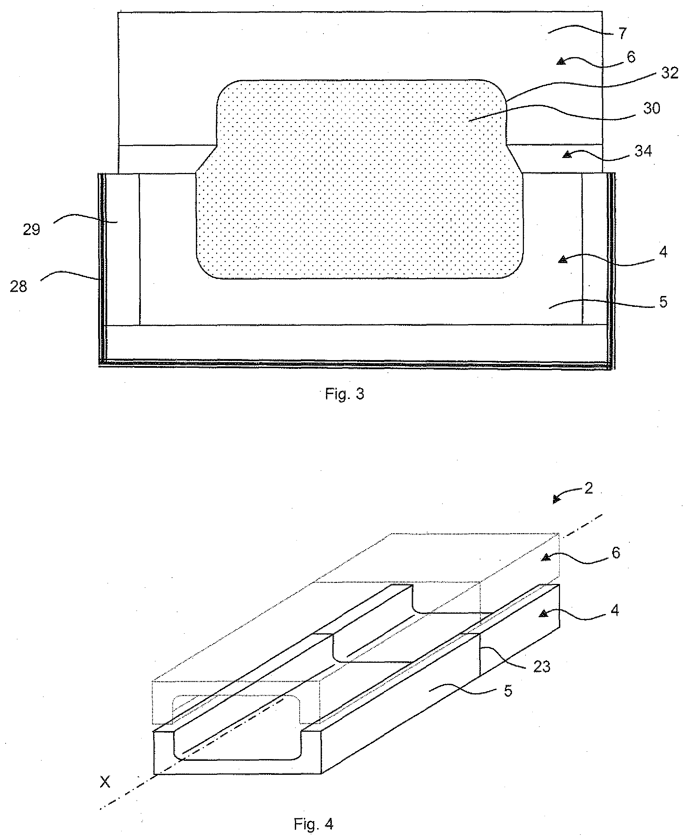

- Ladite infrastructure est totalement constituée en blocs autocoulés *in situ* et frittés *in situ* ;
- Ledit canal d'alimentation comporte une superstructure au moins en partie, de préférence totalement constituée en blocs coulés, voire autocoulés, *in situ* et frittés *in situ* ;
- Ledit bloc comporte une base et un jambage s'étendant depuis ladite base jusqu'à une extrémité libre délimitée par une surface supérieure présentant l'aspect d'une face de coulée ;
- Ledit bloc comporte de préférence deux jambages, et, de préférence encore, présente la forme d'un profilé en U ;
- Ledit bloc pèse plus de 600 kg, voire plus de 800 kg, voire plus de 1200 kg, voire plus de 1600 kg, voire plus de 2400 kg, voire plus de 3200 kg, voire plus de 4000 kg ;
- Ledit bloc présente une longueur, mesurée suivant la direction longitudinale du canal d'alimentation (axe X sur la figure 4), supérieure à 0,7 m, supérieure à 1 m, supérieure à 1,5 m, supérieure à 2 m, supérieure à 3 m, supérieure à 4 m, voire supérieure à 5 m.
- Ledit bloc comporte des grains et un liant hydraulique, de préférence un ciment, de préférence à base d'un ciment alumineux, c'est-à-dire contenant plus de 65% d'alumine, de préférence plus de 75% d'alumine, en pourcentage massique sur la base des oxydes ;
- La teneur en liant hydraulique, en particulier en ciment alumineux, est supérieure à 2%, voire supérieure à 3%, voire supérieure à 4%, voire supérieure à 5% et/ou inférieure à 8%, de préférence inférieure à 7%, de préférence inférieure à 6%, en pourcentage massique sur la base des oxydes ;
- Ledit bloc comporte plus de 80%, de préférence plus de 85%, de préférence plus de 90%, de préférence plus de 95%, de préférence plus de 98%, de préférence plus de 99%, de préférence sensiblement 100% d'oxydes, sur la base de la masse du bloc ;
- Ledit bloc présente une composition telle que la teneur totale $Al_2O_3 + ZrO_2 + SiO_2 + CaO + MgO + TiO_2 + Y_2O_3$ est supérieure à 90%, de préférence supérieure à 95%, de préférence supérieure à 98%, de préférence supérieure à 99%, en pourcentage massique sur la base des oxydes.

Dans un premier mode de réalisation particulier, ledit bloc présente une teneur totale $Al_2O_3 + SiO_2 + CaO + Y_2O_3$ supérieure à 90%, de préférence supérieure à 95%, de préférence supérieure à 98%, de préférence supérieure à 99%, en pourcentage massique sur la base des oxydes. Ledit bloc peut en particulier présenter la composition suivante, sur la base de la masse des oxydes et pour un total de 100% :

- $Al_2O_3 > 80\%$, de préférence $Al_2O_3 > 85\%$, de préférence $Al_2O_3 > 90\%$,

- $SiO_2$ < 10%, de préférence $SiO_2$ < 8%, de préférence $SiO_2$ < 7% et, de préférence $SiO_2$ > 2%, de préférence $SiO_2$ > 3%, de préférence $SiO_2$ > 5%,
- CaO < 5%, de préférence CaO < 4%, de préférence CaO < 3%, de préférence CaO < 2%, de préférence CaO < 1% et, de préférence CaO > 0,3%, de préférence CaO > 0,5%,
- $Y_2O_3$ < 5%, de préférence $Y_2O_3$ < 3% et, de préférence $Y_2O_3$ > 1%, de préférence $Y_2O_3$ > 2%,
- autres oxydes < 5%, de préférence « autres oxydes » < 3%.

Dans un deuxième mode de réalisation particulier, ledit bloc présente une teneur totale $Al_2O_3$ + $ZrO_2$ + $SiO_2$ + CaO + $Y_2O_3$ supérieure à 90%, de préférence supérieure à 95%, de préférence supérieure à 98%, de préférence supérieure à 99%, en pourcentage massique sur la base des oxydes. Ledit bloc peut en particulier présenter la composition suivante, sur la base de la masse des oxydes et pour un total de 100% :

- $Al_2O_3$ < 85%, voire $Al_2O_3$ < 80% et, de préférence $Al_2O_3$ > 45%, voire $Al_2O_3$ > 50%, voire $Al_2O_3$ > 60%,
- $SiO_2$ < 25%, voire $SiO_2$ < 20% et, de préférence $SiO_2$ > 5 %, voire $SiO_2$ > 10%
- $ZrO_2$ < 35%, voire $ZrO_2$ < 30%, voire $ZrO_2$ < 25%, voire $ZrO_2$ < 21%, voire $ZrO_2$ < 17%, voire $ZrO_2$ < 13%, et de préférence $ZrO_2$ > 8%, de préférence $ZrO_2$ > 10%,
- CaO < 5%, de préférence CaO < 4%, de préférence CaO < 3%, de préférence CaO < 2% et, de préférence CaO > 0,3%, de préférence CaO > 0,5%,
- $Y_2O_3$ < 5%, de préférence $Y_2O_3$ < 4% et, de préférence $Y_2O_3$ > 1%, de préférence $Y_2O_3$ > 2%,
- autres oxydes < 5%, de préférence « autres oxydes » < 3%.

Il est décrit aussi un four de verrerie comportant un canal d'alimentation de verre en fusion fabriqué selon l'invention. Il est décrit en particulier un four de verrerie comportant un canal d'alimentation de verre sodocalcique en fusion fabriqué selon l'invention. L'invention concerne un procédé de fabrication d'un bloc d'une infrastructure d'un canal d'alimentation de four de verrerie comportant une infrastructure comportant un bloc autocoulé *in situ* et fritté *in situ*, ledit procédé comportant les étapes suivantes :

a) préparation d'un produit non façonné autocoulable, activé et dégazé sous vide partiel,
b) préparation, à l'endroit où ledit bloc est destiné à être utilisé, d'un moule correspondant à la forme dudit bloc,
c) alimentation en résurgence du moule, avec élimination de bulles localisées à la surface dudit produit non façonné autocoulable, activé et dégazé introduit dans ledit moule, correspondant à la surface dudit bloc destinée à entrer en contact avec du verre en fusion ;
d) durcissement dudit produit non façonné autocoulable activé et dégazé introduit dans ledit moule de manière à former une préforme ;
e) optionnellement, démoulage de ladite préforme ;
f) attrempage de manière à sécher et fritter ladite préforme.

Un tel procédé implique donc :

- la préparation classique d'un produit non façonné autocoulable activé;
- un dégazage ;
- une alimentation en résurgence ; et
- des moyens permettant d'absorber, au moins en partie, les bulles qui remontent et apparaissent à la surface du produit non façonné qui entrera, en service, en contact avec du verre en fusion.

Lorsque ces quatre conditions sont remplies, les inventeurs ont découvert qu'il est possible de fabriquer un bloc autocoulé *in situ* et fritté *in situ* qui présente une surface de contact avec le verre en fusion de qualité équivalente à celle des blocs coulés en usine et frittés en four de cuisson selon la technique antérieure.

Enfin, ce procédé permet de fabriquer de gros blocs, ce qui réduit le nombre de joints, et donc augment la durée de vie du canal d'alimentation.

La longueur des blocs fabriqués et la présence d'une face de coulée à l'extrémité libre d'au moins un des jambages du bloc peuvent constituer des signatures du procédé de fabrication selon l'invention.

L'invention concerne également un procédé de fabrication d'un canal d'alimentation de four de verrerie comportant les étapes suivantes :

A. fabrication, suivant un procédé de fabrication selon l'invention, d'un bloc d'infrastructure comportant une base et deux jambages, de préférence profilé en U;
B. optionnellement, montage d'un ou plusieurs bloc-brûleurs au-dessus d'au moins un desdits jambages ;

C. mise en place d'un moule de forme adaptée à la fabrication d'un bloc de superstructure ;

D. coulage d'un produit non façonné dans ledit moule de superstructure.

Comme on le verra plus en détail dans la suite de la description, ce procédé permet de fabriquer rapidement le canal d'alimentation.

De préférence, un noyau utilisé pour définir une surface intérieure dudit bloc d'infrastructure est utilisé pour définir une surface intérieure d'un bloc de superstructure disposé au-dessus dudit bloc d'infrastructure.

De préférence, on coule simultanément un bloc d'infrastructure et un bloc de superstructure.

Il est décrit enfin l'utilisation d'un produit non façonné autocoulable pour fabriquer *in situ* un bloc d'un canal d'alimentation de four de verrerie destiné à entrer en contact avec du verre en fusion, en particulier avec du verre sodocalcique.

**Définitions**

- Par « mélange particulaire », on entend un mélange sec de particules (non liées entre elles).

  Par « particule », on entend un objet solide au sein d'un mélange particulaire.

  On appelle « taille » d'une particule la moyenne de sa plus grande dimension dM et de sa plus petite dimension dm : (dM+dm)/2. La taille des particules d'un mélange particulaire est évaluée classiquement par une caractérisation de distribution granulométrique réalisée avec un granulomètre laser. Le granulomètre laser peut être, par exemple, un Partica LA-950 de la société HORIBA.

  Les percentiles ou « centiles » 10 ($D_{10}$), 50 ($D_{50}$), 90 ($D_{90}$) et 99,5 ($D_{99,5}$) d'un mélange particulaire sont les tailles de particules correspondant aux pourcentages, en masse, de 10 %, 50 %, 90 % et 99,5 % respectivement, sur la courbe de distribution granulométrique cumulée des particules du mélange particulaire, les tailles de particules étant classées par ordre croissant. Par exemple, 10 %, en masse, des particules ont une taille inférieure à $D_{10}$ et 90 % des particules en masse ont une taille supérieure à $D_{10}$. Les percentiles peuvent être déterminés à l'aide d'une distribution granulométrique réalisée à l'aide d'un granulomètre laser.

  On appelle « taille maximale » le percentile 99,5 ($D_{99,5}$) de ladite poudre.

  On appelle « taille médiane » le percentile $D_{50}$, c'est-à-dire la taille divisant les particules en première et deuxième populations égales en masse, ces première et deuxième populations ne comportant que des particules présentant une taille supérieure, ou inférieure respectivement, à la taille médiane.

- Par « sphéricité » d'une particule, on entend le rapport entre son plus petit diamètre et son plus grand diamètre, quelle que soit la façon par laquelle cette sphéricité a été obtenue.

  Une particule est dite « non granulée » lorsqu'elle n'est pas formée par une agglomération de grains, par granulation classique ou par atomisation notamment.

- On appelle « produit non façonné », ou « béton non façonné », un mélange de particules humide apte à prendre en masse de manière à constituer un produit façonné. Le produit non façonné est « activé » lorsqu'il est dans un processus de prise en masse. L'activation résulte classiquement d'une humidification avec de l'eau ou un autre liquide.

- Un produit non façonné autocoulable est un produit non façonné qui présente la faculté de s'écouler sous son propre poids, sans action mécanique extérieure de type vibrations, et sans ségrégation. L'absence de ségrégation implique une teneur en eau limitée. La valeur de coulabilité est mesurée suivant l'enseignement général de la norme ASTM C1446-99 au moyen d'un cône tronqué creux présentant des bases de 70 et 100 mm et une hauteur de 80 mm, avec un temps de malaxage égal à 15 minutes, la valeur après étalement, en mm, étant mesurée 5 minutes après le soulèvement du cône, la valeur de coulabilité étant la moyenne, dans deux directions perpendiculaires, des dimensions du produit non façonné activé étalé. La valeur de coulabilité d'un produit non façonné autocoulable est supérieure à 270 mm.

  Les produits non façonnés autocoulables sont utilisés depuis plus de 20 ans et sont bien connus de l'homme du métier. Ils peuvent avoir des compositions très différentes. Ils sont par exemple décrits dans l'article « Les bétons réfractaires autocoulables », Hommes et Fonderie - Avril 1993, pages 17 à 20. FR 2 937 636 décrit également des produits non façonnés autocoulables, ou « auto nivelants ».

  La répartition granulométrique d'un produit non façonné autocoulable peut notamment être déterminée au moyen de modèles de prévisions mathématiques, par exemple à l'aide du modèle de compaction d'Andréasen, comme décrit dans « High performance refractory castable : particle size design », refractories applications and news, vol 8, n°5, pages 17 à 21 (2003) ou dans « the effect of particle-size distribution on flow of refractory castables », the American Ceramic Sóciéty 30th Annual refractories symposium, 25 mars 1994.

  Un produit non façonné pompable est un produit non façonné qui présente la faculté de pouvoir être véhiculé par une pompe, et donc de ne pas se déstructurer lors du passage dans ladite pompe.

L'autocoulabilité et la pompabilité sont deux propriétés différentes. En particulier, un produit non façonné pompable n'est pas nécessairement autocoulable. Par exemple, le produit de l'exemple comparatif 2 décrit ci-après n'est pas autocoulable, puisqu'il présente de la ségrégation lors du coulage, mais est pompable car il peut être mis en place à l'aide d'une pompe.

- On appelle « produit façonné », ou « béton façonné », un matériau solide, dont la microstructure est constituée par un granulat dont les grains sont solidarisés.

On appelle « granulat » un ensemble de grains réfractaires dont au moins 90% en masse ont une taille comprise entre 50 $\mu$m et 15 mm.

Dans un produit façonné, on appelle « taille » d'un grain la moyenne entre sa plus grande dimension et sa plus petite dimension, ces dimensions étant mesurées sur une coupe dudit produit.

Une préforme est un exemple de produit façonné, obtenu par prise en masse d'un mélange particulaire, généralement par humidification avec de l'eau. Les grains y sont liés au moyen d'une phase liante, qui peut être temporaire.

Un produit fritté est un autre exemple de produit façonné, obtenu par frittage d'une préforme. Les grains y sont liés au moyen d'une « matrice », c'est-à-dire d'une phase cristallisée ou non, assurant une phase continue entre les grains, et résultant du frittage. La « matrice » doit être distinguée de la phase liante éventuellement présente avant frittage, par exemple du fait de l'activation d'un liant hydraulique.

Par « bloc », on entend un produit façonné obtenu par un moulage d'un produit non façonné (à la différence d'une couche de revêtement).

- Un coulage « *in situ* » d'un bloc (en anglais « cast in place ») est un coulage effectué à l'endroit précis où le bloc doit être utilisé (position de service). Un coulage *in situ* permet de fabriquer des gros blocs, impossibles à déplacer ultérieurement. Un coulage *in situ* implique donc généralement que le frittage est également effectué *in situ.*

- Une alimentation d'un moule ou un coulage « en résurgence », également appelé « en source », est une alimentation selon laquelle le produit non façonné s'écoule du bas du moule vers le haut du moule. Autrement dit, le produit non façonné qui pénètre dans le moule est introduit sous le produit non façonné déjà présent dans le moule.

- L'attrempage est la première montée en température d'un four de fusion du verre.

- On appelle « frittage » un traitement thermique par lequel des particules réfractaires d'une préforme se transforment pour former une matrice liant entre elles d'autres particules de ladite préforme.

- Par « matière réfractaire », on entend une matière présentant un point de fusion ou de dissociation supérieur à 1000°C.

- On appelle « fibres » des structures allongées, typiquement de diamètre de 0,1 $\mu$m à 2 mm et de longueur allant jusqu'à 3 cm environ.

Les teneurs en oxydes se rapportent aux teneurs globales pour chacun des éléments chimiques correspondants, exprimées sous la forme de l'oxyde le plus stable, selon la convention habituelle de l'industrie.

Sauf indication contraire, toutes les teneurs en oxydes des produits fabriqués selon l'invention sont des pourcentages en masse exprimés sur la base des oxydes.

Par « contenant un », « comprenant un » ou « comportant un », on entend « comportant au moins un », sauf indication contraire.

## Brève description des figures

D'autres caractéristiques et avantages de la présente invention apparaîtront encore à la lecture de la description détaillée qui va suivre et à l'examen du dessin annexé dans lequel :

- les figures 1 et 4 représentent, en perspective et à la même échelle, un canal d'alimentation selon la technique antérieure et fabriqué selon l'invention, la superstructure étant représentée en traits pointillés pour la clarté de la figure ;
- la figure 2 représente, en perspective, un bloc d'infrastructure fritté d'un canal d'alimentation ;
- la figure 3 représente, en coupe transversale, un bloc d'infrastructure fabriqué selon l'invention, le noyau étant encore en place ;
- la figure 5 représente un noyau disposant d'une forme apte à éliminer une partie des bulles.

Dans les différentes figures, des organes identiques ou analogues portent la même référence.

**Description détaillée**

**Fabrication d'un bloc**

Un bloc fabriqué selon l'invention est fabriqué suivant les étapes a) à f) ci-dessus.

Les préparations du moule et du produit non façonné peuvent être réalisées de manière indépendante.

Etape a) : préparation du produit non façonné

Pour rendre autocoulable un produit non façonné, on peut mettre en œuvre toutes les techniques connues de préparation de produits non façonnés autocoulables. De préférence, le produit non façonné fabriqué présente une valeur de coulabilité, mesurée comme décrit ci-dessus, supérieure à 300 mm.

Pour activer un produit non façonné, on mélange classiquement dans un malaxeur différents constituants, et en particulier un mélange particulaire de particules réfractaires, un liant, de l'eau et, de préférence, un tensio-actif additif, voire un accélérateur de prise ou un retardateur de prise.

Ces constituants représentent ensemble, de préférence, plus de 90%, plus de 95%, voire sensiblement 100% du produit non façonné.

Toutes les compositions des mélanges particulaires de particules réfractaires utilisés pour fabriquer des infrastructures de canaux d'alimentation de four de verrerie peuvent être envisagées.

De manière bien connue de l'homme du métier, la composition du mélange particulaire est adaptée à la composition souhaitée pour le bloc à fabriquer. En particulier, les oxydes réfractaires présents dans le produit non façonné se retrouvent, sensiblement dans leur totalité, dans le bloc fritté.

De préférence, le mélange particulaire de particules réfractaires comporte 90% à 99% de particules d'au moins un matériau réfractaire dont le ou les constituants principaux sont l'alumine ($Al_2O_3$) et/ou la zircone ($ZrO_2$) et/ou la silice ($SiO_2$).

On peut utiliser différents matériaux réfractaires, provenant par exemple :

- des matériaux réfractaires électrofondus tels que l'ER-1681 ou l'ER-1711 produits et commercialisés par la Société Européenne des Produits Réfractaires. Ces deux produits contiennent en pourcentage en masse, sur la base des oxydes : 32 à 54% de $ZrO_2$, 36 à 51 % d' $Al_2O_3$, 10 à 16% de $SiO_2$ et 0,2 à 1,5% de $Na_2O$ ;
- des matériaux réfractaires en mullite fondue, par exemple une poudre qui contient 76,5% d'$Al_2O_3$ et 22,5% de $SiO_2$ ;
- des matériaux à forte teneur en zircone, tels que la zircone CC10 commercialisée par la Société Européenne des Produits Réfractaires. Ce produit contient plus de 99% de $ZrO_2$ et la taille médiane ($D_{50}$) des particules de zircone est de 3,5 $\mu$m ;
- de l'alumine réactive, ou un mélange d'alumines réactives, contenant plus de 99% d'$Al_2O_3$, la taille médiane des particules d'alumine réactive pouvant varier de 0,2 $\mu$m à 3 $\mu$m ;
- de l'alumine calcinée, ou un mélange d'alumines calcinées, contenant plus de 99% d'$Al_2O_3$, la taille médiane des particules d'alumine calcinée pouvant varier de 3 $\mu$m à 6 $\mu$m;
- de l'alumine électrofondue dont les particules ont une taille comprise entre 0,04 et 10 mm;
- de l'alumine tabulaire dont les particules ont une taille inférieure à 10 mm ;
- du zircon $ZrSiO_4$ ;
- de la silice telle que la fumée de silice commercialisée par la Société Européenne des Produits Réfractaires. Cette silice vitreuse contient plus de 93% de silice ($SiO_2$) et se présente sous la forme d'une poudre dont les particules ont une taille comprise entre 0,1 et 5 $\mu$m et une taille médiane de 0,5 $\mu$m.

De préférence, le mélange particulaire de particules réfractaires comporte plus de 1%, plus de 3%, plus de 5% et/ou moins de 15% d'alumine réactive ou d'un mélange d'alumines réactives contenant plus de 99% d'$Al_2O_3$, la taille médiane des particules d'alumine réactive pouvant varier de 0,5 $\mu$m à 3 $\mu$m.

Dans un mode de réalisation, le mélange particulaire de particules réfractaires comporte plus de 1%, plus de 2%, plus de 3%, et/ou moins de 9%, moins de 8%, moins de 7% de fumée de silice.

De préférence, la taille médiane des particules de silice est inférieure à 5 $\mu$m, de préférence inférieure à 1 $\mu$m. De préférence, le mélange particulaire de particules réfractaires comporte de la fumée de silice, de préférence en une quantité comprise entre 3% et 5%, en pourcentage massique sur la base du mélange particulaire de particules réfractaires

Dans un mode de réalisation, le mélange particulaire contient plus de 1%, de préférence plus de 5%, de préférence encore plus de 7%, et moins de 10% de particules sphériques, c'est-à-dire présentant une sphéricité supérieure à 0,8, de préférence supérieure à 0,9, non granulées. De préférence, ces particules sphériques présentent une taille médiane supérieure ou égale à 0,1 $\mu$m et inférieure ou égale à 2 mm, de préférence inférieure ou égale à 1 mm, de préférence inférieure ou égale à 100 $\mu$m, de préférence encore inférieure ou égale à 1 $\mu$m, l'écart type relatif des tailles des particules sphériques non granulées, mesuré par le rapport entre l'écart type et la moyenne de cette distribution étant de préférence inférieur à 100%, de préférence inférieur à 60%, de préférence encore inférieur à 10%, comme décrit dans FR2894957. De préférence, lesdites particules sphériques non granulées contiennent plus de 90%, de préférence plus de 95%, de préférence plus de 99% d'alumine, par exemple une poudre de particules sphéroïdales Admatech 0502 fournie par la société Admatech, présentant un diamètre médian égal à 2 $\mu$m.

De préférence, le mélange particulaire de particules réfractaires présente une courbe de répartition granulométrique telle que :

- $D_{99,5}$ < 12 mm, de préférence $D_{99,5}$ < 10 mm, de préférence $D_{99,5}$ < 8 mm, de préférence $D_{99,5}$ < 6 mm, de préférence $D_{99,5}$ < 5 mm et/ou,
- $D_{50}$ > 50 $\mu$m, de préférence $D_{50}$ > 100 $\mu$m et $D_{50}$ < 500 $\mu$m, de préférence $D_{50}$ < 400 $\mu$m, et/ou
- $D_{10}$ > 0,5 $\mu$m, de préférence $D_{10}$ > 0,8 $\mu$m et $D_{10}$ < 20 $\mu$m, de préférence $D_{10}$ < 10 $\mu$m.

De préférence encore,

- $D_{99,5}$ < 12 mm, de préférence $D_{99,5}$ < 10 mm, de préférence $D_{99,5}$ < 8 mm, de préférence $D_{99,5}$ < 6 mm, de préférence $D_{99,5}$ < 5 mm, et
- $D_{50}$ > 50 $\mu$m, de préférence $D_{50}$ > 100 $\mu$m et $D_{50}$ < 500 $\mu$m, de préférence $D_{50}$ < 400 $\mu$m, et
- $D_{10}$ > 0,5 $\mu$m, de préférence $D_{10}$ > 0,8 $\mu$m et $D_{10}$ < 20 $\mu$m, de préférence $D_{10}$ < 10 $\mu$m.

FR 2 937 636 fournit des exemples de distribution granulométrique pouvant convenir à la fabrication de produits non façonnés autocoulables.

De préférence, le liant est apte à conférer une liaison, de préférence une liaison hydraulique. Comme exemples de liants utilisables, on peut citer, de façon non limitative :

- des liants temporaires organiques (c'est-à-dire éliminés en tout ou en partie lors du frittage), tels que des résines, des dérivés de la cellulose ou de la lignone, comme la carboxyméthylcellulose, la dextrine, la gélatine, les alginates, les tyloses, la pectine ;
- des agents de prise chimiques, tels que l'acide phosphorique, le monophosphate d'aluminium, le silicate d'éthyle, la silice colloïdale, les hydrates d'alumine, en particulier l'Alphabond 300 commercialisé par la société Almatis ;
- des agents de prise hydraulique, tels que les ciments Portland et les ciments alumineux, de type aluminate de chaux comme le ciment CA25, le ciment CA14 ou le ciment CA270.

Par réaction chimique ou par modification de la température, le liant permet d'augmenter la viscosité jusqu'à provoquer une prise en masse.

De préférence le liant est un liant hydraulique (ou « ciment hydraulique ») qui, lors de l'activation, génère une prise en masse et un durcissement hydrauliques, généralement à température ambiante.

De préférence, la teneur en alumine du ciment hydraulique est supérieure à 60% en masse. De préférence encore, le ciment hydraulique contient, comme constituants principaux de l'alumine et des aluminates de calcium.

Le ciment hydraulique peut être en, particulier un ciment alumineux ou un mélange de différents ciments. Pour limiter la teneur en chaux (CaO), on préfère utiliser un ciment à forte teneur en alumine, tel que le ciment CA25 de la société Almatis. Le ciment CA25 contient plus de 78% d'$Al_2O_3$ et moins de 19% de CaO. Les particules du ciment CA25 ont une taille médiane d'environ 8 $\mu$m.

De préférence, la quantité de liant, et en particulier de ciment hydraulique, est supérieure à 2%, voire supérieure à 3%, voire à 4%, et/ou inférieure à 8%, de préférence inférieure à 7%, en pourcentage massique sur la base de la matière sèche du produit non façonné.

De préférence, le produit non façonné comporte encore un agent tensio-actif, de préférence dans une proportion massique, sur la base de la matière sèche, de 0,01% à 1%, de préférence en une quantité supérieure à 0,02%, voire supérieure à 0,05%, voire supérieure à 0,1%, et/ou inférieure à 0,5%, de préférence encore inférieure à 0,4%. Le rôle de cet agent tensio-actif est notamment de modifier les propriétés rhéologiques du produit non façonné pour en faciliter le pompage. On utilise de préférence des agents tensio-actifs de type polycarboxylate modifié, de préférence de type éther polycarboxylate modifié, de préférence encore à base de polyéthylène glycol.

De préférence, le produit non façonné comporte encore un accélérateur de prise, de préférence dans une proportion de 0,01% à 0,15%, en pourcentage massique sur la base de la matière sèche du produit non façonné. De tels accélérateurs de prise sont connus en eux-mêmes par l'homme du métier, par exemple le Silubit BL05, commercialisé par la société Zschimmer et Schwarz.

La coulabilité du produit non façonné dépend de la quantité d'eau introduite et de la distribution granulométrique des particules du mélange particulaire.

Le produit non façonné comporte une quantité d'eau de préférence supérieure à 4,5%, ou supérieure à 5%, ou supérieure à 6%, et/ou inférieure à 9%, inférieure à 8%, inférieure à 7%, en pourcentage massique par rapport à la masse du mélange particulaire de particules réfractaires et du liant.

L'ajout d'eau active le liant, en particulier le ciment hydraulique, c'est-à-dire provoque le début de la prise en masse.

Le produit non façonné peut comporter des fibres, en particulier présentant une longueur moyenne comprise entre 10 et 24 mm, par exemple de fibres de polypropylène, de polyacrylonitrile ou de polyvinyl alcool. Dans un mode de réalisation préféré, pour améliorer la coulabilité, le produit non façonné ne contient pas de fibres.

Le produit non façonné présente, après ajout de l'eau, une couche de ségrégation, telle que définie ci-après, présentant une épaisseur « e » inférieure à 7 mm, de préférence inférieure à 5 mm, de préférence inférieure à 4 mm, de préférence inférieure à 3 mm.

Le dégazage est une opération consistant à placer le produit non façonné en dépression, de manière à faciliter la génération de bulles et leur extraction. Cette opération, connue en soi, permet d'extraire une partie de l'air dissous ou emprisonné dans le produit non façonné, et donc limite la génération ultérieure de bulles, en particulier pendant le durcissement.

Le dégazage est de préférence effectué dans une enceinte sous vide partiel, de préférence dans un appareil différent du malaxeur. De préférence, la pression dans l'enceinte est inférieure 0,2 Pa, de préférence inférieure à 0,1 Pa.

La durée complète de dégazage, comprenant le temps d'alimentation de l'enceinte sous vide et le temps de maintien du produit non façonné dans ladite enceinte, peut être comprise entre 1 et 20 minutes, voire entre 1 et 15 minutes par unité de 600 kg de produit non façonné introduit. Autrement dit, la durée complète de dégazage d'une quantité de produit non façonné égale à 1200 kg sera de préférence comprise entre 2 et 40 minutes, voire comprise entre 2 et 30 minutes.

Dans un mode de réalisation, le transfert du produit non façonné du malaxeur jusqu'à cet appareil est effectué à l'aide d'une pompe.

L'appareil de dégazage est de préférence une enceinte dans laquelle on introduit le produit non façonné. Comme décrit dans les exemples, l'air est principalement éliminé lorsque le produit non façonné pénètre dans ladite enceinte sous vide partiel.

On qualifie de « dégazé » un produit non façonné ayant été soumis à une dépression, même si ce dégazage n'est pas total.

L'appareil de dégazage est de préférence mobile, et peut être déplacé en fonction des besoins à proximité des différents moules à remplir. Par exemple, il peut être déplacé à l'aide d'un palan ou de rails.

De préférence, l'appareil de dégazage est disposé le plus près possible du point d'injection dans le moule.

Dans un mode de réalisation, le dégazage est effectué sur un produit non façonné humidifié, mais sensiblement non activé, par exemple après un ajout d'eau mais avant ajout d'un accélérateur de prise. A l'étape a), le dégazage peut ainsi être effectué avant l'activation. De préférence cependant, le dégazage est effectué sur un produit non façonné activé.

Etape b) : préparation du moule

Le moule destiné à la fabrication selon l'invention d'un bloc, ou « moule d'infrastructure », peut être fabriqué de manière conventionnelle, au moyen d'un coffrage.

Cependant, le bloc étant destiné à être coulé *in situ* et fritté *in situ,* il est préférable qu'au moins une partie du moule soit constitué par des parois destinées à rester en place après coulage du bloc. En particulier, les surfaces extérieures des blocs des canaux d'alimentation (cette surface extérieure est référencée 24 sur la figure 2) sont classiquement calorifugées. Il est donc avantageux d'installer ce calorifugeage avant de fabriquer le bloc de manière à ce qu'il puisse servir au moulage.

De même, pour définir une partie du moule, il est possible d'utiliser une couche de ragréage, une sous-couche de béton, ou une enveloppe métallique 28, classiquement appelée « casing », classiquement séparée du bloc 5 par une couche isolante 29 (voir figure 3).

De préférence, le moule d'infrastructure comporte un noyau 30 destiné à donner la forme à la surface intérieure du bloc 5 à fabriquer selon l'invention (figure 3). Cette surface intérieure est constituée, sur la figure 2, par la surface de fond 20 et les surfaces intérieures 22a et 22b des jambages. Ce noyau peut être également adapté pour donner la forme à la surface intérieure 32 du bloc 7 de superstructure, par exemple profilé en U, disposé au-dessus dudit bloc 5. Autrement dit, le noyau 30 ayant servi à la fabrication d'un bloc d'infrastructure peut être ensuite utilisé, sans devoir être déplacé, pour fabriquer le bloc de superstructure placé au-dessus de ce bloc d'infrastructure. La fabrication du canal d'alimentation en est avantageusement accélérée.

De préférence, le noyau, et plus généralement la partie du moule destinée à définir une surface du bloc destinée à entrer en contact avec du verre en fusion, dite « surface de contact », est adapté pour pouvoir éliminer, au moins en partie, de préférence sensiblement en totalité, les bulles qui remontent du produit non façonné disposé dans le moule et atteignent la surface du moule destinée à délimiter la surface de contact.

De préférence, cette partie du moule est constituée par :

- un noyau comprenant ou recouvert par au moins une couche drainante (c'est-à-dire autorisant l'évacuation des bulles) et/ou constitué en un matériau drainant,
- un noyau adapté pour l'établissement d'une dépression à l'interface avec le produit non façonné, afin d'avoir une action drainante, ou
- un noyau disposant d'une forme apte à éliminer une partie desdites bulles, ou
- un noyau présentant une combinaison de ces caractéristiques.

Dans un mode de réalisation, la couche drainante est une nappe de coffrage, par exemple une nappe en Zemdrain®.

La région drainante du noyau s'étend au moins de façon à définir la surface de contact,

En particulier, un noyau poreux permet, par perméabilité, de réduire, voire de supprimer les bulles du produit non façonné avec lesquelles il entre en contact. Dans un mode de réalisation, le noyau est réalisé en polystyrène expansé.

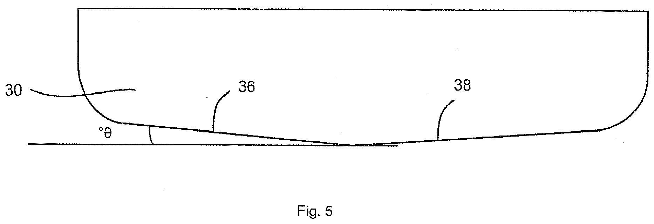

Pour disposer d'une forme apte à éliminer des bulles, le noyau comporte de préférence, dans la partie destinée à définir la surface de fond 20, une surface inclinée par rapport à l'horizontale d'un angle θ de préférence supérieur à 1°, supérieur à 2°, supérieur à 3°, supérieur à 4°, et/ou de préférence inférieur à 6° ou inférieur à 5°. Le noyau 30 représenté sur la figure 5 comporte ainsi deux surfaces 36 et 38 sensiblement planes, inclinées d'un angle θ de 5° avec l'horizontal, permettant de définir une surface de fond en V.

Etape c) : alimentation du moule

L'alimentation du moule est effectuée en résurgence.

A cet effet, le produit non façonné autocoulable, activé et dégazé, peut pénétrer dans le moule par un conduit dont l'extrémité libre débouche à proximité du fond du moule au début du remplissage, puis est maintenue dans le produit remplissant déjà le moule. De préférence, on utilise une pompe pour introduire le produit dans le moule.

A la différence d'un remplissage conventionnel, selon lequel le produit non façonné est versé dans le moule, classiquement depuis une goulotte, le remplissage par résurgence limite l'introduction d'air dans le produit lors de l'alimentation du moule.

Le remplissage se poursuit jusqu'au niveau souhaité.

Le dégazage du produit non façonné avant son introduction dans le moule ne peut être que partiel. Des bulles continuent en effet à remonter et peuvent notamment atteindre la surface du moule définissant la surface du bloc destinée à entrer en contact avec du verre en fusion. Comme expliqué ci-dessus, cette surface du moule est adaptée pour qu'au moins une partie des bulles qui l'atteignent soient éliminées.

Etape d) : durcissement

De préférence, le produit non façonné introduit par résurgence ne subit aucune opération avant son durcissement, et en particulier aucune opération de vibration.

L'activation du liant, résultant classiquement de l'ajout de l'eau, provoque la prise en masse et le durcissement du produit non façonné, qui se transforme en préforme.

Etape e) : démoulage

Le démoulage correspond à l'enlèvement d'une ou plusieurs des parois du moule. En particulier, le noyau définissant la surface intérieure du bloc est enlevé ou éliminé.

Etape f) : attrempage

De préférence, l'attrempage comprend une opération de séchage comportant un palier à une température comprise entre 80°C et 150°C, pendant une durée comprise entre 12 heures et 48 heures, suivi d'une montée en température jusqu'à la température d'utilisation du canal d'alimentation, typiquement comprise entre 1150°C et 1450°C.

Il en résulte un séchage et un frittage du bloc.

L'attrempage peut également contribuer au démoulage, par exemple en faisant fondre le noyau.

**Fabrication du canal d'alimentation**

Le procédé de fabrication selon l'invention d'un bloc décrit ci-dessus permet de fabriquer des grands blocs. En effet, ces blocs n'ont pas besoin d'être déplacés après avoir été fabriqués. Le nombre de joints 23 est donc avantageusement réduit comme représenté sur la figure 4.

Les blocs de la superstructure peuvent être des blocs de la technique antérieure.

Dans un mode de réalisation, les blocs de superstructure sont également fabriqués *in situ,* éventuellement par autocoulage. Les contraintes de fabrication sont cependant moins sévères que pour les blocs d'infrastructure. D'abord parce que les blocs de superstructure ne sont pas en contact avec le verre en fusion. Ensuite parce que les bulles ont tendance à remonter, et donc à s'écarter de la surface intérieure des blocs de superstructure.

Comme représenté sur la figure 3, après avoir fabriqué un ou plusieurs blocs d'infrastructure, on peut disposer un ou plusieurs bloc-brûleurs 34 au-dessus des jambages de ces blocs.

On met alors en place un moule de forme adaptée à la fabrication d'un bloc de superstructure. Comme pour le moule d'infrastructure décrit ci-dessus, au moins une partie du moule de superstructure peut être constituée d'un élément destiné à ne pas être démonté, par exemple un coffrage extérieur ou une isolation extérieure. De préférence, pour délimiter la surface intérieure d'un bloc de superstructure, on utilise un noyau ayant déjà servir pour délimiter la surface intérieure du bloc d'infrastructure sous-jacent. La vitesse de fabrication du canal d'alimentation en est avantageusement accélérée.

On coule ensuite un produit non façonné dans ledit moule de superstructure.

La composition du produit non façonné utilisé pour la fabrication d'un bloc de superstructure peut être identique ou différente de celle utilisée pour la fabrication d'un bloc d'infrastructure.

Le bloc de superstructure peut être fabriqué suivant un procédé selon l'invention ou non. En particulier, il est possible d'utiliser un produit non façonné qui n'est pas un produit autocoulable.

Une étape de vibration peut être mise en œuvre.

Les étapes suivantes de durcissement, de démoulage, de séchage et de frittage peuvent être identiques à celles décrites ci-dessus pour la fabrication des blocs d'infrastructure.

La fabrication des blocs peut être exécutée de manière cadencée, la fabrication des blocs de superstructure étant effectuée au fur et à mesure de la fabrication des blocs d'infrastructure correspondants.

Dans un mode de réalisation, on procède suivant la chronologie suivante :

- fabrication du premier bloc d'infrastructure ;
- fabrication du deuxième bloc d'infrastructure et, au-dessus du premier bloc d'infrastructure, du premier bloc de superstructure ;
- fabrication du troisième bloc d'infrastructure et, au-dessus du deuxième bloc d'infrastructure, du deuxième bloc de superstructure ;
- fabrication du quatrième bloc d'infrastructure et, au-dessus du troisième bloc d'infrastructure, du troisième bloc de superstructure ;
- etc.

Dans un autre mode de réalisation, on procède suivant la chronologie suivante :

- fabrication de l'ensemble des blocs d'infrastructure ;
- fabrication de l'ensemble des blocs de superstructure.

Les noyaux de fabrication des blocs d'infrastructure et/ou de superstructure peuvent être éliminés zone par zone, après chaque fabrication d'un ou plusieurs blocs, ou simultanément lors de l'attrempage du canal d'alimentation.

Une partie (dans le cas de coulage par zones) ou la totalité du canal d'alimentation peut être réalisée suivant le procédé selon l'invention.

**Exemples**

Les exemples qui vont suivre permettent d'illustrer, de façon non exhaustive, l'invention.

L'exemple comparatif 1 est un bloc d'infrastructure de canal d'alimentation en BPAL, commercialisé par la société SAVOIE REFRACTAIRES, présentant une longueur L égale à 0,61 m.

L'exemple comparatif 2 est un produit non façonné classiquement utilisé dans la réparation de fours de fusion de verre.

Ce produit non façonné a été mis en œuvre de la manière suivante :

50 kg de mélange particulaire sec sont introduits dans un mélangeur planétaire de type Bonnet. On ajoute ensuite 10,1%, en pourcentage massique sur la base du mélange particulaire, d'une solution aqueuse de silice colloïdale. Puis le tout est malaxé pendant 15 minutes.

Le produit non façonné obtenu est ensuite introduit dans une trémie de collecte d'une enceinte isolée de la trémie par une vanne papillon.

L'enceinte est mise sous vide (0,08 Pa).

Lorsque les 2/3 du volume de la trémie de collecte sont remplis de produit non façonné, la vanne reliant la trémie à l'enceinte est ouverte. Le produit non façonné peut alors s'écouler et être dégazé au fur et à mesure du remplissage de l'enceinte, le maintien du vide dans l'enceinte étant assuré par une pompe à membrane.

Si nécessaire, la trémie de collecte continue à être alimentée au fur et à mesure du transfert du béton dans l'enceinte. Il est cependant nécessaire de s'assurer que le vide entre l'enceinte et la trémie n'est pas cassé tant que le remplissage est en cours.

Une fois le container rempli de la quantité de produit non façonné correspondant au volume du bloc à couler, le vide est cassé.

Le moule présente la forme d'un bloc profilé en U d'infrastructure de canal d'alimentation. Le noyau du moule servant à réaliser la surface de contact est réalisé en polystyrène expansé.

L'enceinte est mise en place au dessus d'un des jambages du moule.

Le fond de l'enceinte est relié à un tuyau de sortie de 50 mm de diamètre et de 500 mm de longueur, dont l'extrémité libre est fermée par un bouchon. Cette extrémité libre est placée directement au contact du fond du moule. Le bouchon est alors retiré et récupéré. Le produit non façonné, activé et dégazé, s'écoule sous son propre poids grâce à ses propriétés d'autocoulabilité. Le moule est rempli en un temps d'environ 4 min. Après la prise en masse, la préforme est démoulée.

Après coulage et prise en masse, on obtient une préforme.

La préforme est démoulée, puis séchée dans une étuve pendant 24 heures à 120°C.

La préforme est ensuite frittée dans un four de cuisson, dans le cycle suivant :

- montée de 20°C à 1300°C à une vitesse de 30°C/h,
- palier de 10 heures à 1300°C,
- descente à température ambiante à une vitesse de 30 °C/h.

L'exemple 1 a été fabriqué de la manière suivante :

Un mélange particulaire comprenant, en pourcentage massique sur la base dudit mélange particulaire, 94% d'alumine (dont 6% d'alumine calcinée, 10,5% d'alumines réactives et 67% d'alumine tubulaire) et 6% d'une fumée de silice commercialisée par la Société Européenne des Produits Réfractaires, contenant plus de 93% de silice ($SiO_2$) et se présentant sous la forme d'une poudre dont les particules ont une taille comprise entre 0,1 et 5 $\mu$m et une taille médiane de 0,5 $\mu$m, est réalisé dans un malaxeur intensif RV11 commercialisé par la société Eirich. La masse dudit mélange particulaire est égale à 550 kg.

Du ciment CA270, en une quantité de 3% sur la base du mélange particulaire, est ajouté et l'ensemble est mélangé pendant 1 minute.

Parallèlement, un mélange consistant en l'eau (4,9%), le tensio-actif (0,03% de Castament® FS20, fabriqué par la société BASF) et éventuellement un accélérateur de prise (silubit BL05) est réalisé à l'aide d'un agitateur fixé à l'extrémité d'une perceuse. Le temps de malaxage est égal à 30 secondes. Ce mélange est versé sur le mélange particulaire de particules réfractaires. Le tout est malaxé pendant 15 minutes.

Le produit non façonné autocoulable ainsi activé est ensuite versé dans la benne d'une pompe à double pistons de marque Reed, modèle B20hp, après lubrification des tuyaux de sortie de la pompe à l'aide de Primeapump fourni par la société Lansdown Products.

Le produit non façonné obtenu est ensuite pompé de la benne (la benne permettant une alimentation régulière des pistons de la pompe) et introduit dans une trémie de collecte d'une enceinte isolée de la trémie par une vanne papillon. On procède alors à un dégazage, à une alimentation en résurgence d'un moule profilé en U d'infrastructure, à un démoulage, à un séchage et à un frittage, comme pour l'exemple comparatif 2.

**Surface de contact**

On considère que sur l'aspect de la surface qui sera en contact avec le verre en fusion après démoulage (surface de contact 16 au fond du canal) est satisfaisant si :

quand la longueur L est supérieure ou égale à 1 mètre :

- sur un carré C quelconque (figure 2) de 10 cm x 10 cm, cette surface :

  ◦ présente au plus une bulle de diamètre supérieur à 5 mm et
  ◦ présente au plus 1 bulle de diamètre compris entre 3 et 5 mm, et
  ◦ présente au plus 22 bulles de diamètre inférieur à 3 mm, et

- par mètre suivant la longueur L de cette surface, ladite surface présente :

  ◦ au plus 2 bulles de diamètre supérieur à 5 mm,
  ◦ au plus 40 bulles de diamètre compris entre 3 et 5 mm, et
  ◦ au plus 200 bulles de diamètre inférieur à 3 mm, ou

quand la longueur L est inférieure à 1 mètre, ladite surface présente au plus 2 bulles de diamètre supérieur à 5 mm, et au plus 40 bulles de diamètre compris entre 3 et 5 mm, et au plus 200 bulles de diamètre inférieur à 3 mm.

Le comportement au contact d'un verre sodocalcique a été apprécié à l'aide des essais suivants :

**Test de corrosion**

La corrosion par un verre sodocalcique a été évaluée par un test consistant à mettre au contact d'un bain de verre sodocalcique en fusion à 1300°C une cuve dont les parois sont constituées des échantillons à tester, pendant une durée de 51 jours. Chaque échantillon présente une longueur égale à 250 mm, une largeur de 50 mm et une hauteur de 100 mm. Durant le test, le verre n'est pas renouvelé. Il est seulement complété pour obtenir une profondeur de verre de 80 mm. A la fin de l'essai, on évalue le volume corrodé pour chaque échantillon par le calcul suivant :
Le volume de l'échantillon est mesuré à l'aide d'un pied à coulisse avant essai. Le volume initial (Vi) est égal à la hauteur x la largeur x 50 mm.
Pour mesurer le volume final (Vf), on découpe une tranche de l'échantillon considéré, sensiblement à mi-longueur de l'échantillon, la longueur de la tranche étant de 50 mm.
Le volume final (Vf) est mesuré par double pesée hydrostatique de cette tranche : la tranche est mise sous vide puis imbibée d'eau, pesée à l'air et en immersion ; la différence de pesées correspond au volume de la tranche (principe de la poussée d'Archimède).
Le volume corrodé Vc est évalué par la perte de volume pendant l'essai.

$$Vc = Vf - Vi$$

Le rapport du volume corrodé de l'échantillon à évaluer $Vc_{ech}$ est rapporté à celui du volume corrodé de l'exemple de référence $Vc_{ref}$ (exemple comparatif 1) pour fournir un indice de performance en résistance à la corrosion, ou « indice de corrosion », Ic, suivant la formule :

$$I_C = \frac{Vc_{ech}}{Vc_{ref}} * 100$$

Ainsi, un indice Ic supérieur à 100 représente un volume corrodé moins important que le volume corrodé de l'exemple de référence.

**Test du lâcher de pierres**

Le test du lâcher de pierres, permettant d'apprécier l'aptitude d'un produit réfractaire fritté à relâcher des pierres dans un verre sodocalcique en fusion, est réalisé de la manière suivante : on trempe, dans un creuset de platine rempli de verre sodocalcique en fusion et disposé à l'intérieur d'un four à une température de 1300°C, une carotte du produit réfractaire fritté au ¾ de sa hauteur (cylindre de 10 mm de diamètre et 80 mm de longueur). La carotte est ensuite extraite du bain de verre après un temps de séjour dans le verre en fusion de 72 heures. Une goutte de verre se forme à l'extrémité de la carotte. On compare la quantité de pierres relâchées dans la goutte de verre et dans le verre restant dans le creuset en platine avec celles de produits de référence connues et indicées de 0 à 5, un indice égal à 0 faisant référence à du verre sans pierre et un indice égal à 5 faisant référence au maximum de pierres dans le verre.
De bons résultats au test de lâcher de pierres correspondent à un faible taux de rebuts dans les pièces en verre qui seront fabriquées à partir du verre en fusion transitant dans un canal d'alimentation fabriqué avec le produit réfractaire fritté testé.

**Coulabilité**

La coulabilité a été mesurée suivant la norme ASTM C1446-99 au moyen d'un cône tronqué creux présentant des bases de 70 et 100 mm et une hauteur de 80 mm. Ledit cône est posé sur une table, à l'horizontal, sur sa grande base. Le produit non façonné est versé dans le cône, après avoir été malaxé pendant 15 minutes. Après une minute d'attente pour s'affranchir d'éventuels phénomènes de thixotropie, le cône est soulevé de manière que le produit non façonné s'étale sur la table naturellement, sans vibration ou autre apport d'énergie 5 minutes après l'étalement. On mesure une dimension de la nappe de produit non façonné ainsi obtenue, puis la dimension de cette nappe perpendiculairement à cette première dimension. La «coulabilité » est la moyenne de ces deux mesures, en mm.

**Ségrégation**

L'aptitude à la ségrégation est évaluée par le test suivant : 25 kg de produit non façonné sont préparés dans un mélangeur, avec un temps de malaxage de 15 minutes, puis déversés dans une trémie préalablement huilée, en forme de pyramide tronquée, disposée pointe en bas, et présentant une hauteur 320 mm, une ouverture d'entrée de section carrée supérieure de 350 mm x 350 mm et une ouverture de sortie de section carrée inférieure de 130 x 130 mm initialement fermée par une trappe.
La trappe de la trémie est ensuite ouverte d'un coup sec et le produit non façonné se déverse sous son propre poids, à travers l'ouverture de sortie, dans l'extrémité supérieure (à 700 mm du sol) d'une gouttière rectiligne en PVC demi-circulaire préalablement huilée, présentant un diamètre de 170 mm et une longueur 1600 mm, l'extrémité inférieure de la gouttière étant à 380 mm du sol.
Le produit non façonné s'écoule dans la gouttière et se déverse dans un moule disposé sous la gouttière, sous l'extrémité inférieure de la gouttière. Le moule est un moule en bois de dimensions 250 mm x 150 mm x 150 mm, de section de remplissage égale à 150 mm x 150 mm, huilé et disposé horizontalement sur le sol.
On attend ensuite que le produit non façonné durcisse sous la forme d'un bloc.
Après étuvage à 110°C pendant 24 heures, le bloc est scié en deux par son centre, exposant ainsi deux faces sciées de section 250 mm x 150 mm. La ségrégation conduit les plus gros grains à migrer en s'écartant de la face supérieure du bloc. L'aptitude à la ségrégation est évaluée par l'épaisseur « e » de la couche superficielle de laitance s'étendant depuis la face supérieure du bloc (mesurable sur les faces sciées). Cette couche est également appelée « couche de ségrégation ». On considère que l'aptitude à la ségrégation est inacceptable lorsque l'épaisseur « e » de la couche de laitance est supérieure à 7 mm.
Le tableau 1 suivant résume les résultats obtenus :

Tableau 1

| | Exemple comparatif 1 : BPAL fritté | Exemple comparatif 2 : non façonné non autocoulable | Exemple 1 fabriqué selon l'invention |
|---|---|---|---|
| Caractéristiques du produit non façonné | | | |
| Liaison | 3% Ciment CA25 | Silice colloïdale | 3% Ciment CA270 |
| $D_{99,5}$ ($\mu$m) | 3000 | > 5250 | 3000 |
| $D_{50}$ ($\mu$m) | 200 | Entre 100 et 250 | 200 |
| $D_{10}$ ($\mu$m) | 1 | <2 | 1 |
| eau (%) | 4,3% | 9% (mélange eau + silice colloïdale) | 4,9% |
| Coulabilité (mm) | - | 290 | 330 |
| Ségrégation e (en mm) | - | 10 | 3 |
| Caractéristiques du produit fritté | | | |
| %$Al_2O_3$ | 93 | 42,6 | 92,5 |
| %$SiO_2$ | 6 | 22 | 6,4 |

(suite)

| Caractéristiques du produit fritté | | | |
|---|---|---|---|
| %ZrO$_2$ | - | 35,2 | - |
| %CaO | 0,6 | 0,05 | 0,9 |
| %Autres | 0,4 | 0,15 | 0,2 |
| Densité (g/cm$^3$) | 3,10 | 3,25 | 3,06 |
| Porosité ouverte (%) | 15 | 19,7 | 16 |
| Aspect de surface (zone de 10x10 cm$^2$)<br>Nb bulles Ø 5 mm<br>Nb bulles 3<Ø<5 mm<br>Nb bulles Ø<3 mm | 0<br>0<br>11 | 11<br>7<br>0 | 0<br>1<br>12 |
| Aspect de la surface de contact verre (nombre de bulles total)<br>Nb bulles Ø 5 mm<br>Nb bulles 3<Ø<5 mm<br>Nb bulles Ø<3 mm | 0<br>0<br>20 | 260<br>400<br>100 | 0<br>7<br>48 |
| Indice de corrosion | 100 | 71 | 96 |
| Lâcher de pierres | 0 à 1 | 5 | 0 à 1 |

Le tableau 1 montre que le produit non façonné de l'exemple 1 fabriqué selon l'invention :

- ne présente pas d'aptitude à la ségrégation, contrairement au produit de l'exemple comparatif 2,

- conduit à un produit fritté présentant un aspect de surface satisfaisant, en dépit de conditions de coulage moins favorables que celles existant en usine,

- conduit à un produit fritté présentant une résistance à la corrosion sensiblement identique à celle de l'exemple comparatif 1 et bien supérieure à celle de l'exemple comparatif 2.

Le produit non façonné de l'exemple 1 a été transformé en produit fritté suivant différentes techniques de coulage. Le tableau 2 résume les résultats obtenus :

Tableau 2

| | Produit dégazé, coulage en chute | Produit dégazé, coulage en source, noyau plein (non poreux) | Produit dégazé, coulage en source, noyau en polystyrène expansé | Produit dégazé, coulage en source, noyau plein recouvert d'une nappe drainante Zemdrain® | Produit dégazé, coulage en chute, noyau plein recouvert d'une nappe drainante Zemdrain® |
|---|---|---|---|---|---|
| Aspect de surface (zone de 10x10 cm$^2$)<br>Nb bulles Ø > 5 mm<br>Nb bulles 3<Ø<5 mm<br>Nb bulles Ø<3 mm | 30<br>50<br>> 200 | 8<br>5<br>> 100 | 0<br>1<br>12 | 0<br>1<br>11 | 2<br>5<br>> 100 |

(suite)

| Aspect de la surface de contact verre (nombre de bulles total) | | | | | |
|---|---|---|---|---|---|
| Nb bulles Ø > 5 mm | 200 | 50 | 0 | 0 | 10 |
| Nb bulles 3<Ø<5 mm | 330 | 30 | 7 | 7 | 30 |
| Nb bulles Ø<3 mm | 1350 | 670 | 48 | 44 | 680 |
| Longueur L (m) | 0,61 | 0,61 | 0,61 | 0,61 | 0,61 |

Le tableau 2 illustre l'effet positif, pour un produit autocoulable, de :

-    dégazer le produit non façonné avant coulage, et

-    couler en résurgence le produit non façonné, et

-    utiliser un nappe drainante et/ou un noyau comprenant au moins une couche poreuse en surface, ou totalement poreux dans son volume (ici un noyau en polystyrène expansé).

Comme cela apparaît clairement à présent, un procédé de fabrication selon l'invention permet de fabriquer par autocoulage *in situ* un bloc d'infrastructure de canal d'alimentation de verre en fusion présentant des performances en termes de résistance à la corrosion par le verre sodocalcique et de lâcher de pierres sensiblement identiques à celle d'un produit classiquement fabriqué en usine et fritté dans un four de cuisson. Avantageusement, il est ainsi possible de fabriquer des bocs de grandes dimensions, de limiter ainsi le nombre de joints, et donc d'augmenter la durée de vie du canal d'alimentation.

L'autocoulage *in situ* permet également d'augmenter la vitesse de fabrication du canal d'alimentation.

Bien entendu, la présente invention n'est pas limitée aux modes de réalisation décrits fournis à titre d'exemples illustratifs et non limitatifs.

**Revendications**

1.    Procédé de fabrication d'un bloc d'une infrastructure d'un canal d'alimentation de four de verrerie comportant une infrastructure (4) comportant un bloc (5) autocoulé *in situ* et fritté *in situ,* ledit procédé comportant les étapes suivantes :

    a) préparation d'un produit non façonné autocoulable, activé et dégazé sous vide partiel,
    b) préparation, à l'endroit où ledit bloc est destiné à être utilisé, d'un moule correspondant à la forme dudit bloc,
    c) alimentation en résurgence du moule, avec élimination de bulles localisées à la surface dudit produit non façonné autocoulable, activé, dégazé et introduit dans ledit moule, correspondant à la surface dudit bloc destinée à entrer en contact avec du verre en fusion ;
    d) durcissement dudit produit non façonné autocoulable, activé, dégazé et introduit dans ledit moule de manière à former une préforme ;
    e) optionnellement, démoulage de ladite préforme ;
    f) attrempage de manière à sécher et fritter ladite préforme.

2.    Procédé de fabrication selon la revendication précédente, dans lequel, à l'étape c), on élimine suffisamment de bulles pour que la surface du bloc destinée à être en contact avec du verre en fusion présente :

    si la longueur (L) du bloc est supérieure ou égale à 1 m,

- sur un carré C quelconque de 10 cm x 10 cm :

  ○ au plus une bulle de diamètre supérieur à 5 mm et
  ○ au plus 1 bulle de diamètre compris entre 3 et 5 mm, et
  ○ au plus 22 bulles de diamètre inférieur à 3 mm, et

- par mètre suivant la longueur de cette surface :

  ○ au plus 2 bulles de diamètre supérieur à 5 mm, et
  ○ au plus 40 bulles de diamètre compris entre 3 et 5 mm, et
  ○ au plus 200 bulles de diamètre inférieur à 3 mm, ou

si la longueur (L) est inférieure à 1 mètre,

  ○ au plus 2 bulles de diamètre supérieur à 5 mm, et
  ○ au plus 40 bulles de diamètre compris entre 3 et 5 mm, et
  ○ au plus 200 bulles de diamètre inférieur à 3 mm.

3. Procédé de fabrication d'un canal d'alimentation de four de verrerie comportant les étapes suivantes :

   A. fabrication, suivant un procédé de fabrication selon la revendication précédente, d'un bloc (5) d'infrastructure comportant une base (12) et deux jambages (14a ;14b) ;
   B. optionnellement, montage d'un ou plusieurs bloc-brûleurs (34) au-dessus d'au moins un desdits jambages ;
   C. mise en place d'un moule de forme adaptée à la fabrication d'un bloc de superstructure ;
   D. coulage d'un produit non façonné dans ledit moule de superstructure.

4. Procédé selon la revendication précédente, dans lequel on fabrique simultanément par coulage un bloc d'infrastructure et un bloc de superstructure.

5. Procédé selon l'une quelconque des deux revendications immédiatement précédentes, dans lequel un noyau (30) utilisé pour définir une surface intérieure dudit bloc d'infrastructure est utilisé pour définir une surface intérieure d'un bloc de superstructure disposé au-dessus dudit bloc d'infrastructure.

6. Procédé selon l'une quelconque des revendications 3 à 5, dans lequel le jambage (14a ;14b) s'étend depuis ladite base jusqu'à une extrémité libre délimitée par une surface supérieure (18a ;18b) présentant l'aspect d'une face de coulée.

7. Procédé selon l'une quelconque des revendications précédentes, dans lequel ledit bloc présente la forme d'un profilé en U.

8. Procédé selon l'une quelconque des revendications précédentes, dans lequel ledit bloc présente une longueur, mesurée suivant la direction longitudinale (X) du canal d'alimentation, supérieure à 0,7 m.

9. Procédé selon la revendication précédente, dans lequel ladite longueur est supérieure à 1 m.

10. Procédé selon l'une quelconque des revendications précédentes, dans lequel ledit bloc comporte des grains et un liant hydraulique.

11. Procédé selon la revendication précédente, dans lequel la teneur en ciment alumineux est supérieure à 2% et inférieure à 8%, en pourcentage massique sur la base des oxydes.

12. Procédé selon l'une quelconque des revendications précédentes, dans lequel ledit bloc présente une composition telle que la teneur totale $Al_2O_3 + ZrO_2 + SiO_2 + CaO + MgO + TiO_2 + Y_2O_3$ est supérieure à 90%, en pourcentage massique sur la base des oxydes.

13. Procédé selon la revendication précédente, dans lequel ledit bloc présente une composition telle que la teneur totale $Al_2O_3 + SiO_2 + CaO + Y_2O_3$ supérieure à 90%, en pourcentage massique sur la base des oxydes.

**14.** Procédé selon la revendication précédente, dans lequel ladite composition est telle que, sur la base de la masse des oxydes et pour un total de 100% :

- $Al_2O_3$ > 80%,
- $SiO_2$ < 10%,
- CaO < 5%,
- $Y_2O_3$ < 5%,
- autres oxydes < 5%.

**15.** Procédé selon l'une quelconque des revendications 1 à 11, dans lequel ledit bloc présente une composition telle que la teneur totale $Al_2O_3$ + $ZrO_2$ + $SiO_2$ + CaO + $Y_2O_3$ est supérieure à 90%, en pourcentage massique sur la base des oxydes.

**16.** Procédé selon la revendication précédente, dans lequel ladite composition est telle que, sur la base de la masse des oxydes et pour un total de 100%:

- $Al_2O_3$ > 45%,
- 25%> $SiO_2$ > 5 %,
- 35% > $ZrO_2$ > 8%,
- CaO < 5%,
- $Y_2O_3$ < 5%,
- autres oxydes < 5%.

**Patentansprüche**

**1.** Verfahren zur Herstellung eines Blocks einer Infrastruktur eines Speisekanals eines Glasschmelzofens, umfassend eine Infrastruktur (4), umfassend einen in situ automatisch gegossenen und in situ gesinterten Block (5), wobei das Verfahren die folgenden Schritte umfasst:

a) Herstellen eines automatisch gießbaren ungeformten Produkts, das im Teilvakuum aktiviert und entgast wird,
b) Herstellen, an dem Ort, wo der Block verwendet werden soll, einer Gussform, die der Form des Blocks entspricht,
c) aufsteigendes Speisen der Gussform, mit einer Entfernung von Blasen, welche an der Oberfläche des automatisch gießbaren ungeformten, aktivierten, entgasten und in die Gussform eingebrachten Produkts lokalisiert sind, die der Fläche des Blocks entspricht, welche mit geschmolzenem Glas in Kontakt treten soll,
d) Härten des automatisch gießbaren ungeformten, aktivierten, entgasten und in die Gussform eingebrachten Produkts, um eine Vorform zu bilden,
e) gegebenenfalls Entformen der Vorform;
f) Tempern, um die Vorform zu trocknen und zu sintern.

**2.** Verfahren zur Herstellung nach dem vorhergehenden Anspruch, wobei, in dem Schritt c), die Blasen ausreichend entfernt werden, damit die Oberfläche des Blocks, die mit geschmolzenem Glas in Kontakt treten soll, aufweist:

wenn die Länge (L) des Blocks größer oder gleich 1 m ist,

- auf einem beliebigen Quadrat C mit 10 cm x 10 cm:

  ◦ höchstens eine Blase mit einem Durchmesser größer als 5 mm und
  ◦ höchstens 1 Blase mit einem Durchmesser zwischen 3 und 5 mm, und
  ◦ höchstens 22 Blasen mit einem Durchmesser kleiner als 3 mm, und

- pro Meter entlang der Länge dieser Fläche:

  ◦ höchstens 2 Blasen mit einem Durchmesser größer als 5 mm, und
  ◦ höchstens 40 Blasen mit einem Durchmesser zwischen 3 und 5 mm, und
  ◦ höchstens 200 Blasen mit einem Durchmesser kleiner als 3 mm, oder

wenn die Länge (L) kleiner als 1 m ist,

    ◦ höchstens 2 Blasen mit einem Durchmesser größer als 5 mm, und
    ◦ höchstens 40 Blasen mit einem Durchmesser zwischen 3 und 5 mm, und
    ◦ höchstens 200 Blasen mit einem Durchmesser kleiner als 3 mm.

**3.** Verfahren zur Herstellung eines Speisekanals eines Glasschmelzofens, umfassend die folgenden Schritte:

A. Herstellen, gemäß einem Herstellungsverfahren nach dem vorhergehenden Anspruch, eines Infrastrukturblocks (5), umfassend eine Basis (12) und zwei Schenkel (14a; 14b);
B. gegebenenfalls Montieren eines oder mehrerer Verbrennungsblöcke (34) über mindestens einem der Schenkel;
C. Platzieren einer Gussform mit einer Form, die für die Herstellung eines Superstrukturblocks geeignet ist;
D. Gießen eines ungeformten Produkts in die Superstrukturgussform.

**4.** Verfahren nach dem vorhergehenden Anspruch, wobei gleichzeitig durch Gießen ein Infrastrukturblock und ein Superstrukturblock hergestellt werden.

**5.** Verfahren nach einem der beiden unmittelbar vorhergehenden Ansprüche, wobei ein Kern (30), der zur Definition einer Innenfläche des Infrastrukturblocks verwendet wird, zur Definition einer Innenfläche eines Superstrukturblocks verwendet wird, der über dem Infrastrukturblock angeordnet ist.

**6.** Verfahren nach einem der Ansprüche 3 bis 5, wobei sich die Schenkel (14a; 14b) von der Basis bis zu einem freien Ende erstrecken, das von einer oberen Fläche (18a; 18b) begrenzt wird, die das Aussehen einer gegossenen Fläche aufweist.

**7.** Verfahren nach einem der vorhergehenden Ansprüche, wobei der Block die Form eines U-Profils aufweist.

**8.** Verfahren nach einem der vorhergehenden Ansprüche, wobei der Block eine Länge, gemessen in der Längsrichtung (X) des Speisekanals, größer als 0,7 m aufweist.

**9.** Verfahren nach dem vorhergehenden Anspruch, wobei die Länge größer als 1 m ist.

**10.** Verfahren nach einem der vorhergehenden Ansprüche, wobei der Block Körner und ein hydraulisches Bindemittel umfasst.

**11.** Verfahren nach dem vorhergehenden Anspruch, wobei der Gehalt an aluminiumhaltigem Zement größer als 2 % ist und kleiner als 8 % ist, in Massenprozent auf der Basis von Oxiden.

**12.** Verfahren nach einem der vorhergehenden Ansprüche, wobei der Block eine derartige Zusammensetzung aufweist, dass der Gesamtgehalt von $Al_2O_3 + ZrO_2 + SiO_2 + CaO + MgO + TiO_2 + Y_2O_3$ größer als 90 % ist, in Massenprozent auf der Basis von Oxiden.

**13.** Verfahren nach dem vorhergehenden Anspruch, wobei der Block eine derartige Zusammensetzung aufweist, dass der Gesamtgehalt von $Al_2O_3 + SiO_2 + CaO + Y_2O_3$ größer als 90 % ist, in Massenprozent auf der Basis von Oxiden.

**14.** Verfahren nach dem vorhergehenden Anspruch, wobei die Zusammensetzung derart ist, dass, auf der Basis der Masse von Oxiden und für insgesamt 100 %:

- $Al_2O_3 > 80$ %,
- $SiO_2 < 10$ %,
- $CaO < 5$ %
- $Y_2O_3 < 5$ %,
- andere Oxide < 5 %.

**15.** Verfahren nach einem der Ansprüche 1 bis 11, wobei der Block eine derartige Zusammensetzung aufweist, dass der Gesamtgehalt von $Al_2O_3 + ZrO_2 + SiO_2 + CaO + Y_2O_3$ größer als 90 % ist, in Massenprozent auf der Basis von Oxiden.

16. Verfahren nach dem vorhergehenden Anspruch, wobei die Zusammensetzung derart ist, dass, auf der Basis der Masse von Oxiden und für insgesamt 100 %:

- $Al_2O_3 > 45$ %,
- 25 % > $SiO_2$ > 5 %,
- 35 % > $ZrO_2$ > 8 %,
- CaO < 5 %
- $Y_2O_3$ < 5 %,
- andere Oxide < 5 %.

**Claims**

1. A method for manufacturing a block of an infrastructure of a feeder for a glassmaking furnace comprising an infrastructure (4) comprising a block (5) self-cast *in situ* and sintered *in situ,* said method comprising the following steps:

   a) preparation of a self-castable unshaped product, activated and degassed under partial vacuum,
   b) preparation, at the place where said block is intended to be used, of a mold corresponding to the shape of said block,
   c) bottom feed of the mold, with removal of bubbles located at the surface of said self-castable unshaped product, activated, degassed and introduced into said mold, corresponding to the surface of said block intended to come into contact with molten glass;
   d) hardening of said self-castable unshaped product, activated, degassed and introduced into said mold in order to form a preform;
   e) optionally, mold release of said preform;
   f) heating-up in order to dry and sinter said preform.

2. The method as claimed in the preceding claim, in which, in step c), enough bubbles are removed so that surface of the block intended to be in contact with molten glass has:

   if the length (L) of the block is equal to or greater than 1 m,

   - on any square C measuring 10 cm x 10 cm:

     ○ no more than one bubble having a diameter greater than 5 mm and
     ○ no more than 1 bubble having a diameter between 3 and 5 mm, and
     ○ no more than 22 bubbles having a diameter lower than 3 mm, and

   - per meter along the length of this surface:

     ○ no more than 2 bubbles having a diameter greater than 5 mm, and
     ○ no more than 40 bubbles having a diameter between 3 and 5 mm, and
     ○ no more than 200 bubbles having a diameter lower than 3 mm, or

   if the length (L) is lower than 1 meter,

     ○ no more than 2 bubbles having a diameter greater than 5 mm, and
     ○ no more than 40 bubbles having a diameter between 3 and 5 mm, and
     ○ no more than 200 bubbles having a diameter lower than 3 mm.

3. A method for manufacturing a feeder for a glassmaking furnace comprising the following steps:

   A. manufacture, using a method as claimed in the preceding claim, of an infrastructure block (5) comprising a base (12) and two jambs (14a; 14b);
   B. optionally, assembly of one or more burner blocks (34) above at least one of said jambs;
   C. installation of a mold having a shape adapted to the manufacture of a superstructure block;
   D. casting of an unshaped product in said superstructure mold.

4.  The method as claimed in the preceding claim, in which an infrastructure block and a superstructure block are manufactured simultaneously by casting.

5.  The method as claimed in any of the two immediately preceding claims, in which a core (30) used to define an internal surface of said infrastructure block is used to define an internal surface of a superstructure block placed above said infrastructure block.

6.  The method as claimed in any of claims 3 to 5, in which the jamb (14a; 14b) extends from said base to a free end bounded by an upper surface (18a; 18b) having the appearance of a casting face.

7.  The method as claimed in any of the preceding claims, in which said block has the shape of a U-section.

8.  The method as claimed in any of the preceding claims, in which said block has a length, measured along the longitudinal direction (X) of the feeder, that is greater than 0.7 m.

9.  The method as claimed in the preceding claim, in which said length is greater than 1 m.

10. The method as claimed in any of the preceding claims, in which said block comprises grains and a hydraulic binder.

11. The method as claimed in any of the preceding claims, in which the alumina cement content is higher than 2% and lower than 8%, in percentage by weight in relation to the oxides.

12. The method as claimed in any of the preceding claims, in which said block has a composition such that the total $Al_2O_3 + ZrO_2 + SiO_2 + CaO + MgO + TiO_2 + Y_2O_3$ content is higher than 90%, in percentage by weight in relation to the oxides.

13. The method as claimed in any of the preceding claims, in which said block has a composition such that the total $Al_2O_3 + SiO_2 + CaO + Y_2O_3$ content is higher than 90%, in percentage by weight in relation to the oxides.

14. The method as claimed in the preceding claim, in which said composition is such that, in relation to the weight of the oxides and for a total of 100%:

    - $Al_2O_3 > 80\%$,
    - $SiO_2 < 10\%$,
    - $CaO < 5\%$,
    - $Y_2O_3 < 5\%$,
    - other oxides < 5%.

15. The method as claimed in any of claims 1 to 11, in which said block has a composition such that the total $Al_2O_3 + ZrO_2 + SiO_2 + CaO + Y_2O_3$ content is higher than 90%, in percentage by weight in relation to the oxides.

16. The method as claimed in the preceding claim, in which said composition is such that, in relation to the weight of the oxides and for a total of 100%:

    - $Al_2O_3 > 45\%$,
    - $25\% > SiO_2 > 5\%$,
    - $35\% > ZrO_2 > 8\%$,
    - $CaO < 5\%$,
    - $Y_2O_3 < 5\%$,
    - other oxides < 5%.

Fig. 1

Fig. 2

Fig. 3

Fig. 4

Fig. 5

**Documents brevets cités dans la description**

- WO 2004065327 A
- FR 2937636
- FR 2894957

**Littérature non-brevet citée dans la description**

- Feuerfeste Werkstoffe im kontakt mit der Glassschmelze. *HVG: "Fortbildungskurs 1998: Feuerfeste Werkstoffe für die Glasindustrie und deren Prüfung",* 01 Janvier 2005, ISBN 3-921089-24-7 pages 24-25,38
- Les bétons réfractaires autocoulables. *Hommes et Fonderie,* Avril 1993, 17-20
- High performance refractory castable : particle size design. *refractories applications and news,* 2003, vol. 8 (5), 17-21
- the effect of particle-size distribution on flow of refractory castables. *American Ceramic Sociéty 30th Annual refractories symposium,* 25 Mars 1994